# EUROPÄISCHE PATENTSCHRIFT

(11) **EP 0 502 331 B1**
(45) Veröffentlichungstag und Bekanntmachung des Hinweises auf die Patenterteilung: **10.08.1994**
(21) Anmeldenummer: 92101935.2
(22) Anmeldetag: 06.02.1992
(51) Int. Cl.: F16F 1/18, B60G 11/10

(54) **Blattfederpaket**
Leaf spring package
Paquet de ressorts-lames

(30) Priorität: 06.03.1991 DE 4107186
(43) Veröffentlichungstag der Anmeldung: 09.09.1992
(73) Patentinhaber: MERCEDES-BENZ AG, 70327 Stuttgart (DE)
(72) Erfinder: Berghus, Jürgen, W-7000 Stuttgart 60 (DE); Beuss, Hartmut, W-7000 Stuttgart 61 (DE); Häfele, Edgar, W-7307 Aichwald 1 (DE); Zittel, Siegfried, W-7300 Esslingen (DE)

(56) Entgegenhaltungen:
- AT-B- 176 131
- DE-A- 2 038 164
- DE-A- 2 421 115
- DE-B- 2 349 381

## Beschreibung

Die Erfindung betrifft ein Blattfederpaket gemäß dem Oberbegriff des Anspruches 1.

Blattfederpakete dieser Art sind aus der DE-A 23 49 381 bekannt. Die bekannten Blattfederpakete bestehen aus einem Hauptfederblatt mit angeformten Federaugen und einem dieses untergreifenden Stützfederblatt. Die beiden Federblätter sind in ihrem mittleren Bereich durch einen Herzbolzen verbunden und nahe ihren Enden gegen Aufspreizen in Höhenrichtung (Auffächern) insbesondere durch Federklammern gesichert. Zusätzlich weist das Stützfederblatt eine das Auge des Hauptfederblattes übergreifende Umrollung auf, um beim Bruch des Hauptfederblattes die Führung der Achse über das Blattfederpaket aufrechtzuerhalten. Ferner ist bei der bekannten Konstruktion im Federendbereich, und zwar etwa im Überdeckungsbereich zum Federauge eine in Federlängsrichtung sich erstreckende Rippenführung zwischen Hauptfederblatt und Stützfederblatt vorgesehen, die als Sicherung gegen seitliches Auswandern (Ausfächern) der Federblätter des Federpaketes dient. Gebildet ist diese Rippenführung dadurch, daß das Zusatzfederblatt schmaler als das Hauptfederblatt ausgebildet ist und daß das Hauptfederblatt im seitlich das Zusatzfederblatt überragenden Bereich mit Rippenführungen versehen ist, zwischen denen das Stützfederblatt liegt. Der Abstand der Umrollung zum Federauge des Hauptfederblattes ist so gewählt, daß eine Montage der Federblätter in entlastetem Zustand möglich ist und dadurch auch groß genug, um Berührungen zwischen der Umrollung und dem Federauge praktisch auszuschließen.

Bei dieser bekannten Konstruktion wie bei ähnlichen weiteren Konstruktionen mit Sicherung gegen Ausfächern durch in Federlängsrichtung verlaufende Rippenführungen (OE-PS 176 131) finden, wie bereits erwähnt, Federklammern Verwendung, was einen Zusatzaufwand bedeutet.

Der Erfindung liegt die Aufgabe zugrunde, ein Blattfederpaket der genannten Art mit mehr als zwei Blattfedern 50 zu gestalten, daß auf Federklammern verzichtet werden kann.

Gemäß der Erfindung wird dies bei einem Blattfederpaket der eingangs genannten Art durch die kennzeichnenden Merkmale des Anspruches 1 erreicht.

Bei einem derart aufgebauten Blattfederpaket weisen Hauptfederblatt, Zwischenfederblatt und Stützfederblatt etwa gleiche Länge auf, es ist ferner durch Rippenführungen zwischen Zwischenfederblatt und Stützfederblatt eine Sicherung gegen Ausfächern gegeben und es wird die notwendige Sicherheit gegen Auffächern, die gleichzeitig ein Ausfächern erlauben würde, dadurch erreicht, daß die Umrollung des Stützfederblattes in Höhenrichtung gegenüber dem Federauge ein Spiel aufweist, das kleiner ist als die Führungshöhe der Rippenführungen. Die Zwischenfederblätter sind somit bei dieser Konstruktion durch das Stützfederblatt gegenüber dem Hauptfederblatt im wesentlichen auch in Höhenrichtung fixiert.

Die notwendige Längsverschiebbarkeit zwischen den einzelnen Federblättern des Paketes sowie auch unter schwierigen Bedingungen günstige Reibverhältnisse werden dadurch sichergestellt, daß die Führungsrippen in ihrer Höhe niedriger sind als die Tiefe der Aufnahmenuten, die zudem auch länger als die Führungsrippen sind.

Die Erfindung wird im folgenden mit weiteren Merkmalen anhand der Zeichnungen erläutert. Es zeigen:
- Fig. 1: Eine Seitenansicht eines Blattfederpaketes gemäß der Erfindung, insbesondere für Fahrzeuge
- Fig. 2: eine Draufsicht auf das Blattfederpaket gemäß Fig. 1,
- Fig. 3: eine vergrößerte Darstellung der Feder gemäß Fig. 1 im Bereich des eine Umrollung aufweisenden, insbesondere vorderen Federauges, und
- Fig. 4: eine Ansicht des Blattfederpaketes gemäß Fig. 1 in Richtung des Pfeiles IV und der diesem Federende zugeordnete Federbock.

Das in den Figuren dargestellte Blattfederpaket ist insgesamt mit 1 bezeichnet und umfaßt neben einem Hauptfederblatt 2 mit endseitig angeformtem Federauge 3 ein Stützfederblatt 4. Das Stützfederblatt 4 erstreckt sich über die Länge des Hauptfederblattes und läuft in dargestelltem Ausführungsbeispiel an seinem bezogen auf die Fahrtrichtung F vorderen Ende in einer sogenannten Umrollung 5 aus. Die Umrollung 5 ist durch ein bügelförmiges Teil des Stützfederblattes 4 gebildet und besteht aus einem mit Abstand zum Federauge 3 verlaufenden U-förmigen Bogen 6, dessen einer Schenkel in das Stützfederblatt einläuft und dessen anderer, das Federauge auf der gegenüberliegenden Seite übergreifender Schenkel in einem mit Abstand hinter dem Federauge über dieses eingeschlagenen Abschnitt 7 ausläuft. Der Abstand der beiden Schenkel des U-förmigen, die Umrollung im wesentlichen bildenden Bogens 6 ist einerseits durch die Dicke eines Zwischenfederblattes 8 bestimmt, das sich ebenfalls über die Länge des Hauptfederblattes 2 erstreckt und über das sich im Bereich des Federauges 3 das Stützfederblatt 4 gegen das Hauptfederblatt 2 abstützt. Andererseits ist der Abstand des in den Abschnitt 7 einlaufenden Schenkels des U-förmigen Bogens 6 der Umrollung 5 so gewählt, daß ein leichtes Spiel zwischen dem Federauge 3 und diesem Schenkel des Bogens 6 besteht, wobei dieses Spiel lediglich groß genug ist, um unter normalen Bedingungen zumindest eine im wesentlichen reibungsfreie Bewegbarkeit zwischen diesem Schenkel und dem Federauge 3 zu gewährleisten.

Hauptfederblatt 2, Zwischenfederblatt 8 und Stützfederblatt 4 sind im mittleren Längsbereich des Blattfederpaketes, in dem der Anschluß der hier nicht gezeigten Achse erfolgt, über einen Herzbolzen 9 in bekannter Weise gegeneinander verspannt und sie verlaufen zwischen diesem mittleren Bereich und ihren Endbereichen bei im wesentlichen gleicher Länge mit Abstand zueinander. Stützfederblatt 4 und Zwischenfederblatt 8 enden jeweils im wesentlichen unterhalb des jeweiligen Federauges 3 des Hauptfederblattes, so daß Zwischenfederblatt 8 und Stützfederblatt 4 das Hauptfederblatt 2 über dessen gesamte Länge abstützen.

Außer der Verbindung der Federblätter im längsmittleren Bereich über den Herzbolzen 9 sind im gezeigten Ausführungsbeispiel keine gesonderten Verbindungselemente für die das Blattfederpaket 1 bildenden Federn vorgesehen, wobei abweichend vom gezeigten Ausfünrungsbeispiel die weitere Ausbildung der Erfindung auch mehr als ein Zwischenfederblatt vorgesehen sein kann.

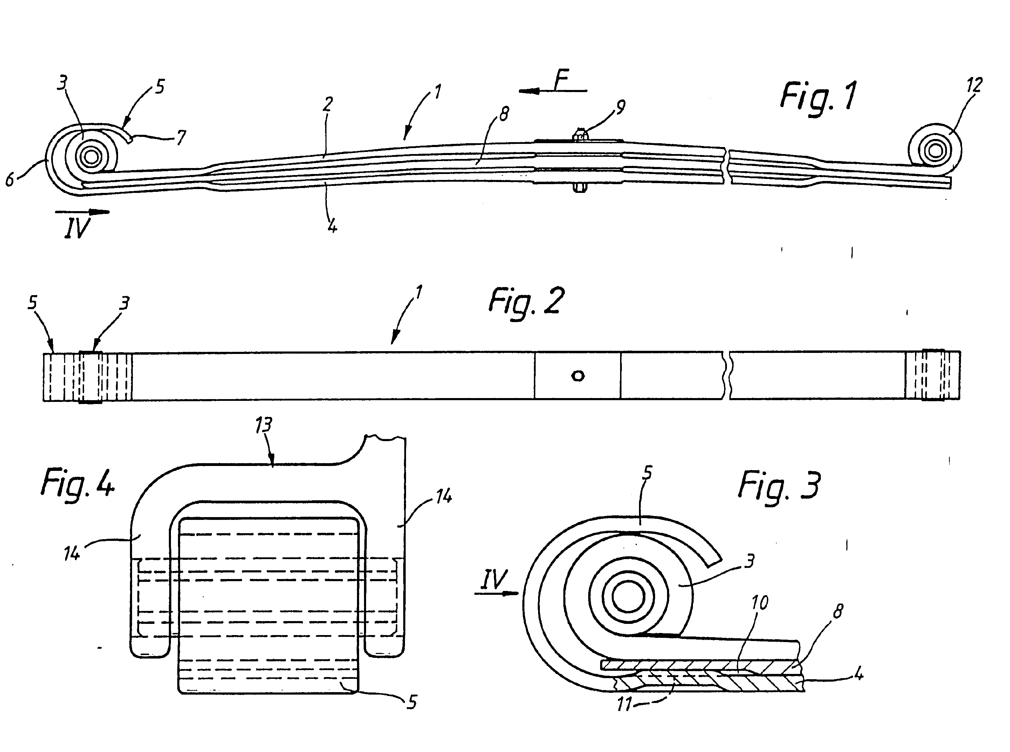

Fig. 2 veranschaulicht diesen Aufbau in Verbindung mit Fig. 1, wobei Fig. 2 auch zeigt, daß im Rahmen der Erfindung die das Blattfederpaket bildenden Federn bevorzugt gleiche Breite aufweisen. Im Einsatz bei Fahrzeugen, insbesondere bei der Führung von Achsen von Fahrzeugen sind Blattfederpakete nicht nur vertikalen Belastungen ausgesetzt, die die Blattfederpakete auf Biegung beanspruchen, sondern haben auch Längs- und Querkräfte aufzunehmen. Längskräfte insbesondere unter dem Einfluß von Bremskräften, die zu einer über die Länge der Feder gesehen S-förmigen Verformung der Feder, dem sogenannten S-Schlag führen, Querkräfte in Folge von Querbelastungen, wie sie sich beim Durchfahren von Kurven ergeben.

Die angesprochenen Längskräfte (Bremskräfte) bedingen tendentiell ein Auffächern des Federpaketes in dem bezogen auf die Fahrtrichtung F vorderen Federteil nach unten (eine Anordnung der Achse unterhalb der Feder angenommen), die angesprochenen Querkräfte führen tendentiell zu einem seitlichen Ausfächern der einzelnen Federn des Federpaketes. Sowohl das Auffächern wie auch das Ausfächern sind als die Führungs- und Tragfunktion der Feder beeinträchtigende Erscheinungen unerwünscht und es wird diesen Tendenzen durch entsprechende Führungsmaßnahmen begegnet, die anhand des Ausführungsbeispieles gemäß Fig. 3 näher erläutert sind.

Fig. 3 zeigt in einer Teilschnittdarstellung, in der das Stützfederblatt und das Zwischenfederblatt 8 abschnittsweise in einem Längsmittelschnitt gezeigt sind, daß das Zwischenfederblatt 8 an seiner Unterseite in dem unterhalb des Federauges 3 auslaufenden Bereich eine Aufnahmenut 10 aufweist, zu der eine Führungsrippe 11 korrespondiert, welche aus dem Stützfederblatt 4 nach oben ausgeformt ist. Die Höhe der Führungsrippe 11 ist geringfügig niedriger als die Tiefe der Aufnahmenut 10 und größer als das Bewegungsspiel, das durch den Abstand zwischen der Umrollung 5 und dem Federauge 3 in der Quermittelebene des Federauges in Höhenrichtung zugelassen wird. Hierdurch sind das Stützfederblatt 4 und das Zwischenfederblatt 8 in Querrichtung gegeneinander fixiert, können also nicht ausfächern, da ein Auffächern durch das enge Spiel der Umrollung 5 gegenüber dem Federauge 3 zugleich ausgeschlossen wird. Die Länge der Aufnahmenut ist dabei jeweils größer als die Länge der Führungsrippe, so daß die Längsverschiebbarkeit der einzelnen Federblätter des Blattfederpaketes gegeneinander nicht behindert ist.

Am rückwärtigen Ende des Blattfederpaketes ist aufgrund der angenommenen Belastungsbedingungen ein Auffächern nicht zu befürchten und es kann dort auf eine Umrollung des mit 12 bezeichneten Federauges durch das Ende des Stützfederblattes 4 verzichtet werden. Bei anderen Belastungsbedingungen (Anordnung der Achse oberhalb der Feder) kann die Anordnung der Umrollung und die Längsverrippung zwischen Stützfederblatt und Zwischenfederblatt am rückwärtigen Federende vorgesehen werden. Unabhängig hiervon kann für die Verbesserung der Querführungseigenschaften und damit zur Verhinderung des Ausfächerns eine Rippenführung mit wechselseitiger Überdeckung gegen seitliches Auswandern (Ausfächern) auch an diesem Federende zweckmäßig sein, was hier jedoch nicht näher dargestellt ist.

Im Rahmen der Erfindung erweist es sich als ausreichend, im Bereich des vorderen Federendes zur Verhinderung des Ausfächerns lediglich das Stützfederblatt und das oder die Zwischenfederblätter durch entsprechende Rippenführung, die jeweils durch eine Aufnahmenut und eine Führungsrippe gebildet sind, untereinander festzulegen. Hierdurch wird vermieden, daß das Hauptfederblatt in seinem hochbelasteten, dem Federblatt benachbarten Bereich durch die aus einer derartigen Rippenführung resultierenden Verformungsmaßnahmen in seinem Tragverhalten beeinträchtigt wird. Ergänzend kann es allerdings zweckmäßig sein, gemäß Fig. 4 das umrollte Ende des Blattfederpaketes über einen U-förmigen Federbock 13 zu haltern, dessen Schenkel 14 sich über die Umrollung 5 seitlich erstrecken und zu dem übergriffenen Seitenbereich des Federpaketes nur ein kleines Spiel aufweisen und dadurch ein seitliches Auswandern der Stützfeder 4 im Bereich der Umrollung 5 gegenüber dem Federauge 3 begrenzen.

Für die Aufnahmenut erweist sich aus Herstellungsgründen ein bogenförmiges Profil als zweckmäßig und entsprechend ergibt sich bevorzugt auch für die Führungsrippe ein im Querschnitt ausgewölbtes, kreisbogenförmiges Profil, wobei die Höhe der Führungsrippe, auch im Falle der Führungsrippe 11, kleiner und bevorzugt etwa halb so groß ist wie der Radius des Kreisbogens. Im Ausführungsbeispiel ist die Höhe der Führungsrippe etwa 3,5 mm, die Tiefe der Aufnahmenut etwa 4 mm und der Radius des Kreisbogens für die Führungsrippe etwa 7 mm und für die Aufnahmenut etwa 8 mm.

Die Länge der Führungsrippe entspricht einem Vielfachen ihrer Höhe und ist im Ausführungsbeispiel mit 50 mm vorgegeben.

## Patentansprüche

1. Blattfederpaket mit einem Hauptfederblatt (2) mit angeformtem Federauge (3) und einem dieses untergreifenden, etwa gleich langen Stützfederblatt (4), das an einem Ende in einer das Auge des Hauptfederblattes übergreifenden Umrollung (5) ausläuft, und bei dem die Federblätter durch zugeordnete Begrenzungen gegen Aufspreizen in Höhenrichtung (Auffächern) und durch eine in Federlängsrichtung verlaufende und im Federendbereich liegende Rippenführung (10,11) mit wechselseitiger Überdeckung gegen seitliches Auswandern (Ausfächern) gesichert sind,
**dadurch gekennzeichnet,**
daß zwischen Hauptfederblatt (2) und Stützfederblatt (4) wenigstens ein Zwischenfederblatt (8) liegt, daß Hauptfederblatt (2), Zwischenfederblatt (8) und Stützfederblatt (4) in Höhenrichtung über das Stützfederblatt (4) zusammengehalten sind, daß Zwischenfederblatt (8) und Stützfederblatt (4) durch Rippenführung (10,11) gegen Ausfächern gesichert sind und daß in Höhenrichtung der Rippenführung das Bewegungsspiel zwischen dem Federauge (3) des Hauptfederblattes (2) und der Umrollung (5) des Stützfederblattes (4) kleiner als die Überdeckungshöhe der Rippenführung (Aufnahmenut 10, Führungsrippe 11) ist.

2. Blattfederpaket nach Anspruch 1
**dadurch gekennzeichnet,**
daß die Höhe der Führungsrippen (11) der Rippenführung kleiner als die Tiefe der Aufnahmenuten (10) ist.

3. Blattfederpaket nach Anspruch 1 oder 2,
**dadurch gekennzeichnet,**
daß die Länge der Aufnahmenuten (10) größer als die Länge der Führungsrippen (11) ist.

4. Blattfederpaket nach einem der vorhergehenden Ansprüche,
**dadurch gekennzeichnet,**
daß die Aufnahmenut (10) des Zwischenfederblattes (8) frei gegen dessen Ende ausläuft.

5. Blattfederpaket nach einem der vorhergehenden Ansprüche,
**dadurch gekennzeichnet,**
daß die Länge der Führungsrippen (11) einem Vielfachen ihrer Höhe entspricht.

6. Blattfederpaket nach einem der vorhergehenen Ansprüche,
**dadurch gekennzeichnet,**
daß lediglich im Bereich des einen, insbesondere vorderen Federendes das Federauge (3) des Hauptfederblattes (2) von einer Umrollung (5) des Stützfederblattes (4) umgriffen ist, und Stützfederblatt (4) und Zwischenfederblatt (8) durch eine Rippenführung verbunden sind und daß im Bereich des rückwärtigen Federendes, in dem das Stützfederblatt (4) zusammen mit dem Zwischenfederblatt (8) frei ausläuft, alle Federn des Blattfederpaketes (Hauptfederblatt 2, Stützfederblatt 4, Zwischenfederblatt 8) über eine Rippenführung verbunden sind.

7. Blattfederpaket nach einem der vorhergehenden Ansprüche,
**dadurch gekennzeichnet,**
daß Hauptfederblatt (2), Zwischenfederblatt (8) und Stützfederblatt (4) im Abschnitt zwischen dem jeweiligen Endbereich und dem mittleren Stützbereich der Feder mit Abstand zueinander verlaufen.

8. Blattfederpaket nach einem der vorhergehenden Ansprüche,
**dadurch gekennzeichnet,**
daß das Blattfederpaket lediglich ein Zwischenfederblatt (8) aufweist.

9. Blattfederpaket nach einem der vorhergehenden Ansprüche,
**dadurch gekennzeichnet,**
daß das Blattfederpaket mehrere Zwischenfederblätter aufweist.

10. Blattfederpaket nach Anspruch 1,
**dadurch gekennzeichnet,**
daß die Umrollung zwischen den Schenkeln eines U-förmigen Federbockes liegt, die seitliche Anschläge bilden.

## Claims

1. Laminated spring set with a master leaf spring [2] with a formed on spring eye [3] and a supporting leaf spring [4] of approximately equal length which grips the master leaf spring from beneath and which at one of its ends has a turned over portion [5] which grips the eye of the master leaf spring from above, whereby the leaves are secured against upward expansion (fanning) by associated limiting devices and against lateral displacement (fanning out) by a rib guide [10, 11] with reciprocal overlap running in longitudinal spring direction and situated in the spring end portion,
characterized in that
at least one intermediate leaf [8] is provided between the master leaf spring [2] and the supporting leaf spring [4], that the master leaf spring [2], intermediate leaf [8] and supporting leaf spring [4] are held together upwardly by the supporting leaf spring [4], that the intermediate leaf [8] and supporting leaf spring [4] are secured against fanning out by a rib guide [10, 11] and that in upward direction of the rib guide the clearance of motion between the spring eye [3] on the master leaf spring [2] and the turned over portion [5] of the supporting leaf spring [4] is smaller than the overlap height of the rib guide (raised slot 10, guide rib 11).

2. Laminated spring set according to Claim 1
characterized in that
the height of the guide ribs [11] on the rib guide is smaller than the depth of the raised slots [10].

3. Laminated spring set according to Claim 1 or 2,
characterized in that
the length of the raised slots [10] is greater than the length of the guide ribs [11].

4. Laminated spring set according to one of the previous Claims,
characterized in that
the raised slot [10] on the intermediate leaf [8] projects freely against the end of the latter.

5. Laminated spring set according to one of the previous Claims,
characterized in that
the length of the guide ribs [11] corresponds to a multiple of their height.

6. Laminated spring set according to one of the previous Claims,
characterized in that
the spring eye [3] on the master leaf spring [2] is gripped by a turned over portion [5] of the supporting leaf spring [4] at only one and particularly the front spring end, and the supporting leaf spring [4] and intermediate leaf [8] are connected by a rib guide and that in the rear spring end portion where the supporting leaf spring [4] projects freely with the intermediate leaf [8], all springs in the laminated spring set (master leaf spring 2, supporting leaf spring 4, intermediate leaf 8) are connected by a rib guide.

7. Laminated spring set according to one of the previous Claims,
characterized in that
the master leaf spring [2], the intermediate leaf [8] and supporting leaf spring [4] run at a distance to each other in the portion between the respective end region and the central support region of the springs.

8. Laminated spring set according to one of the previous Claims,
characterized in that
the laminated spring set has only one intermediate leaf [8].

9. Laminated spring set according to one of the previous Claims, characterized in that the laminated spring set has several intermediate leaves.

10. Laminated spring set according to Claim 1,
characterized in that
the turned over portion is situated between the shackles of a U-shaped spring bracket which form lateral stops.

## Revendications

1. Paquet de ressorts à lame, comportant un ressort à lame principal (2), avec un oeil de ressort (3) formé d'une seule pièce sur lui et un ressort à lame d'appui (4), saisissant le ressort à lame principal par le dessous et de longueur à peu près égale à celle du ressort à lame principal, ayant à un extrémité un enroulement (5) saisissant par le dessus l'oeil du ressort à lame principal, et dans lequel les ressorts à lame sont assurés, au moyen de butées associées, empêchant tout écartement dans la direction de la hauteur (montée en éventail) et au moyen d'un guidage à nervure (10, 11), s'étendant dans la direction longitudinale du ressort et réalisé dans la zone d'extrémité du ressort, offrant un recouvrement mutuel empêchant tout déploiement latéral (ouverture en éventail), caractérisé en ce qu'entre le ressort à lame principal (2) et le ressort à lame d'appui (4) est monté au moins un ressort à lame intermédiaire (8), en ce que le ressort à lame principal (2), le ressort à lame intermédiaire (8) et le ressort à lame d'appui (4) sont maintenus assemblés dans la direction de la hauteur, par l'intermédiaire du ressort à lame d'appui (4), en ce que le ressort à lame intermédiaire (8) et le ressort à lame d'appui (4) sont assurés au moyen du guidage à nervure (10, 11) empêchant toute ouverture en éventail, et en ce que, dans la direction de la hauteur du guidage à nervure, le jeu de mouvement entre l'oeil de ressort (3) du ressort à lame principal (2) et de l'enroulement (5) du ressort à lame d'appui (4) est inférieur à la hauteur de recouvrement du guidage à nervure (rainure de réception 10, nervure de guidage 11).

2. Paquet de ressorts à lame selon la revendication 1, caractérisé en ce que la hauteur des nervures de guidage (11) du guidage à nervure est inférieure à la profondeur des rainures de réception (10).

3. Paquet de ressorts à lame selon la revendication 1 ou 2, caractérisé en ce que la longueur des rainures de réception (10) est supérieure à la longueur des nervures de guidage (11).

4. Paquet de ressorts à lame selon l'une des revendications précédentes, caractérisé en ce que la rainure de réception (10) du ressort à lame intermédiaire (8) s'étend vers son extrémité, en étant dégagée à l'endroit de l'extrémité.

5. Paquet de ressorts à lame selon l'une des revendications précédentes, caractérisé en ce que la longueur des nervures de guidage (11) est un multiple de leur hauteur.

6. Paquet de ressorts à lame selon l'une des revendications précédentes, caractérisé en ce que, seulement dans la zone d'une première extrémité de ressort, de préférence l'extrémité avant, l'oeil de ressort (3) du ressort à lame principal (2) est enchâssé par un enroulement (5) du ressort à lame d'appui (4), et le ressort à lame d'appui (4) et le ressort à lame intermédiaire (8) sont reliés au moyen d'un guidage à nervure, et en ce que, dans la zone de l'extrémité arrière de ressort, dans laquelle le ressort à lame d'appui (4) s'étend, librement, conjointement avec le ressort à lame intermédiaire (8), tous les ressorts du paquet de ressorts à lame (ressort à lame principal 2, ressort à lame d'appui 4, ressort à lame intermédiaire 8) sont reliés par l'intermédiaire d'un guidage à nervure.

7. Paquet de ressorts à lame selon l'une des revendications précédentes, caractérisé en ce que le ressort à lame principal (2), le ressort à lame intermédiaire (8) et le ressort à lame d'appui (4) s'étendent, à distance les uns des autres, dans le tronçon situé entre la zone d'extrémité respective et la zone d'appui médiane du ressort.

8. Paquet de ressorts à lame selon l'une des revendications précédentes, caractérisé en ce que le paquet de ressorts à lame comporte un seul ressort à lame intermédiaire (8).

9. Paquet de ressorts à lame selon l'une des revendications précédentes, caractérisé en ce que le paquet de ressorts à lame comporte plusieurs ressorts à lame intermédiaires.

10. Paquet de ressorts à lame selon la revendication 1, caractérisé en ce que l'enroulement est constitué entre les branches, qui constituent des butées latérales, d'une main de ressort en U.
